# EUROPEAN PATENT APPLICATION

(11) **EP 3 115 725 A1**
(43) Date of publication of application: **11.01.2017**
(21) Application number: 14884842.7
(22) Date of filing: 05.03.2014
(51) Int. Cl.: F28D 7/10, F25B 39/00, F28F 1/36, F28F 1/40

(54) **DOUBLE TUBE, HEAT EXCHANGER, AND METHOD FOR MANUFACTURING DOUBLE TUBE**

(71) Applicant: The Chugoku Electric Power Co., Inc., Hiroshima-shi, Hiroshima 730-8701 (JP); Hiroshima University, Higashi-Hiroshima-shi Hiroshima 739-8511 (JP); Toyo Koatsu Co., Ltd., Hiroshima 733-0022 (JP)
(72) Inventor: WADA, Yasutaka, Hiroshima-shi Hiroshima 730-8701 (JP); KUBOTA, Haruhito, Hiroshima-shi Hiroshima 730-8701 (JP); YAMAMURA, Yukimasa, Hiroshima-shi Hiroshima 730-8701 (JP); UCHIYAMA, Ichiro, Hiroshima-shi Hiroshima 730-8701 (JP); OYAMA, Keiji, Hiroshima-shi Hiroshima 730-8701 (JP); YAMASAKI, Toshiki, Hiroshima-shi Hiroshima 730-8701 (JP); MATSUMURA, Yukihiko, Higashihiroshima-shi Hiroshima 739-8511 (JP); KAWAI, Yoshifumi, Hiroshima-shi Hiroshima 7340001 (JP); NOGUCHI, Takashi, Hiroshima-shi Hiroshima 733-0002 (JP)
(74) Representative: Moreland, David
(86) International application number: PCT/JP2014/055694
(87) International publication number: WO 2015/132921

(57) **Abstract**

A double tube and the like includes: a cylindrical outer tube; a cylindrical inner tube including a helical protrusion in an outer circumferential surface, the inner tube being provided inside the outer tube; and a helical flow passage forming member that forms a helical flow passage inside the inner tube, the helical flow passage forming member being provided inside the inner tube.

## Description

### Technical Field

The present invention relates to double tubes, heat exchangers, and methods to manufacture a double tube.

### Background

There is known, for example, a double tube that is a heat exchanger in which a first helical elongated protrusion is formed in a winding manner to an outer surface of an inner tube, a second helical elongated protrusion that matches with the first helical elongated protrusion is formed to an inner surface of an outer tube, the inner tube and the outer tube contact each other in only the inner surface of the second helical elongated protrusion and the outer surface of the first helical elongated protrusion, and in the other surfaces are opposed and form a helical flow passage between such surfaces (for example, refer to PTL 1).

### Citation List

### Patent Literature

PTL 1: Japanese Patent Application Laid-open Publication No.2012-193869

### Summary

### Technical Problem

With the above-described double tube, because a flow passage to the inner side of the inner tube is wider than a flow passage formed between the inner tube and the outer tube, flow velocity in the inner side of the inner tube becomes slow and lumps and the like of inorganic material do not flow easily, and precipitate or accumulate, thus there is a possibility that the inner tube is obstructed.

The present invention has been made in view of the above matters, and this invention aims to provide a double tube in which solids do not easily precipitate or accumulate in the flow passage of the double tube, a heat exchanger, and a manufacturing method of a double tube.

### Solution to Problem

The present invention to achieve the above-described object is a double tube including: a cylindrical outer tube; an inner tube including a helical protrusion in an outer circumference, the inner tube forming a helical flow passage with the outer tube, the inner tube being provided inside the outer tube; and a helical flow passage forming member that forms a helical flow passage inside the inner tube, the helical flow passage forming member being provided inside the inner tube.

With such a double tube, a flow passage is formed between the helical protrusion provided to the outer circumference of the inner tube and the inner circumferential surface of the outer tube between the inner tube and the outer tube, and such a flow passage has a cross section smaller than a cross section of a flow passage formed between the inner tube and the outer tube that are arranged concentrically. Further, inside the inner tube, a flow passage with a smaller cross section than the cross section of the inner tube is formed with the helical flow passage forming member provided inside the inner tube. Thus, flow passages with a small cross section are formed between the inner tube and the outer tube and inside the inner tube, and the flow velocity of each flow passage in the double tube becomes fast, and a double tube in which solids do not easily precipitate or accumulate in the flow passages is provided.

With the double tube, preferably, the helical protrusion is a thread that is formed in an outer circumference of a cylindrical tube material forming the inner tube.

According to such a double tube, the helical flow passage between the inner tube and the outer tube is formed with the thread formed in the outer circumference of the inner tube and the inner circumferential surface of the outer tube, and by merely forming the thread in the outer circumference of the inner tube, the helical flow passage can be easily provided between the inner tube and the outer tube.

With the double tube, the helical protrusion may be a fin provided helically in an outer circumference of a cylindrical tube material configuring the inner tube.

According to such a double tube, the helical flow passage between the inner tube and the outer tube is formed with the helical fin provided to the outer circumference of the inner tube and the inner circumferential surface of the outer tube, and by merely providing the helical fin in the outer circumference of the inner tube, the helical flow passage can be easily provided between the inner tube and the outer tube.

With the double tube, preferably the helical flow passage forming member is a helical plate having a curved surface formed helically.

According to such a double tube, the helical flow passage formed inside the inner tube is formed with the helical plate, thus there is no section inside the inner tube that is unnecessary for forming the flow passage and that takes up space inside the inner tube, such as a shaft part along a longitudinal direction of the inner tube, for example. Thus, the helical flow passage can be formed by using the inside of the inner tube more effectively.

Further a heat exchanger including: an inner tube of a double tube, the inner tube being formed of a metal that is heat-conductive and is heat-resistant, the heat exchanger conducting heat exchange between a fluid that flows through a helical flow passage in an outer side of the inner tube of the double tube and a fluid that flows through a helical flow passage in an inner side of the inner tube.

According to such a heat exchanger, a heat exchanger can be provided that conducts heat exchange between the helical flow passage formed between the inner tube and the outer tube and the helical flow passage formed inside the inner tube. Further, because the flow passage formed between the inner tube and the outer tube and the flow passage formed inside the inner tube are helical, the flow passage with a smaller cross section than the cross section of the inner tube and the space between the inner tube and the outer tube and longer than the length of the outer tube can be provided inside the double tube. Thus, the heat exchanger that is a short double tube and that can efficiently exchange heat can be provided.

Further, a method to manufacture a double tube including an inner tube and an outer tube, including: forming the inner tube provided with a helical protrusion in an outer circumference; forming a helical flow passage forming member that forms a helical flow passage inside the inner tube; and fixing in an integral manner the protrusion to an inner circumferential surface of the outer tube by arranging the protrusion to contact or be near to the inner circumferential surface of the outer tube, and the helical flow passage forming member to an inner circumferential surface of the inner tube by arranging the helical flow passage forming member to contact or be near to the inner circumferential surface of the inner tube.

According to such a method to manufacture a double tube, the helical flow passage can be easily formed between the inner tube and the outer tube and inside the inner tube.

With the method to manufacture a double tube, preferably a thread, as the helical protrusion, is formed in an outer circumference of a tube material that forms the inner tube.

According to such a method to manufacture a double tube, by forming the thread in the outer circumference of the tube material that forms the inner tube, the helical flow passage can be easily formed between the inner tube and the outer tube.

With the method to manufacture a double tube, preferably a helical fin, as the helical protrusion, is welded to an outer circumferential surface of a tube material that configures the inner tube.

According to such a method to manufacture a double tube, the helical fin is welded to the outer circumferential surface of the tube material that configures the inner tube to form the helical protrusion, thus the cross-sectional shape of the helical flow passage to be formed can be arbitrarily set with the size of the fin.

### Advantageous Effects of Invention

According to this invention, it is possible to provide a double tube in which solids do not easily precipitate or accumulate in a flow passage in the double tube, a heat exchanger, and a method to manufacture a double tube.

### Brief Description of Drawings

[Fig. 1] Fig. 1 is a front view showing a heat exchanger using a double tube according to the present invention.
[Fig. 2] Fig. 2 is a view describing a secondary flow.

### Description of Embodiments

As an embodiment of the present invention, for example, a double tube, which is a heat exchanger of a fluid at high temperature and high pressure, and that is used in a water-containing biomass supercritical water gasifier is described below as an example.

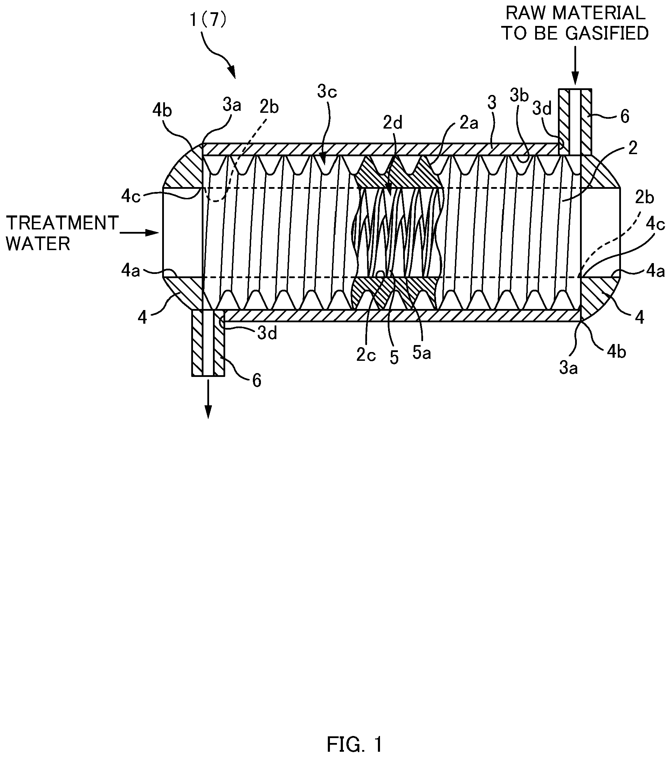

As shown in Fig. 1, the double tube 1 in this embodiment includes an inner tube 2 and an outer tube 3, end part closing members 4 each provided to each end part of the outer tube 3, and a helical flow passage forming member 5 provided inside the inner tube 2.

The inner tube 2 is formed of a metal that is heat-conductive and heat-resistant, and the inner tube 2 is formed with helical protrusions 2a in the outer circumference. The inner tube 2 is formed to be substantially the same length as the outer tube 3, and an outer diameter of the inner tube 2 that is to be tip parts of the helical protrusions 2a is formed to be substantially the same as an inner diameter of the outer tube 3.

The inner part 2 is contained inside the outer tube 3 such that the tip parts of the helical protrusions 2a contact an inner circumferential surface of the outer tube 3.

The end part closing member 4 is a discal member having substantially the same outer diameter as the outer diameter of the outer tube 3, and a through hole 4a having substantially the same inner diameter as the inner diameter of the inner tube 2 is formed in the center of the disk. The end part closing member 4 is provided to each end part of the outer tube 3 in which the inner tube 2 is contained, and each outer circumferential edge part 4b is welded to an outer circumferential edge part 3a in each end part of the outer tube 3 over the entire circumference, and each inner circumferential edge part 4c is welded to an inner circumferential edge part 2b of each end part of the inner tube 2 over the entire circumference. In other words, between the inner tube 2 and the outer tube 3, a space forming a flow passage connected helically is formed with the helical protrusions 2a of the inner tube 2 and an inner circumferential surface 3b of the outer tube 3, and such space is closed in both end parts with the end part closing members 4.

The outer tube 3 is provided with two communicating tubes 6 that make the helical space formed inside and the outside to be in communication at each end part of the outer tube 3, and the outer tube 3 is formed such that a fluid that has entered from one communicating tube 6 passes through the helical space and flows out from the other communicating tube 6.

The helical flow passage forming member 5 provided inside the inner tube 2 is a plate-shaped helical plate having a curved surface formed helically, and the inner tube 2 and the outer tube 3 have substantially the same length. The helical flow passage forming member 5 forms inside the inner tube 2 a helical flow passage (hereinafter, referred to as an inner helical flow passage) 2d that causes a fluid flowing in the inner tube 2 to not flow straight forward but to flow along the curved surface of the helical flow passage forming member 5. The outer diameter of an outer circumferential edge 5a of the helical flow passage forming member 5 is formed to substantially match an inner diameter of the inner tube 2.

The helical flow passage forming member 5 is contained in the inner tube 2 such that the outer circumferential edge 5a contacts an inner circumferential surface 2c of the inner tube 2 and both end parts are welded to inner circumferential edge parts 2b of the inner tube 2. In other words, an inner helical flow passage 2d that is connected helically is provided inside the inner tube 2, and the inner helical flow passage 2d is formed with the inner circumferential surface 2c of the inner tube 2 and a curved surface of the helical flow passage forming member 5, connected with the outside at both ends. Here, this embodiment describes an example in which the helical flow passage forming member 5 is formed with only a plate-shaped member having a helical curved surface, but a shaft part that extends along the longitudinal direction of the inner tube 2 at the center of the plate-shaped member having the helical curved surface may be provided.

With the double tube 1 of this embodiment, for example, a low temperature raw material to be gasified is made to flow through a helical flow passage (hereinafter, referred to as an outer helical flow passage) 3c between the inner tube 2 and the outer tube 3, so as to flow in from one communicating tube 6 and to flow out from the other communicating tube 6. In the inner tube 2, high temperature treatment water that flows out from a gasification reactor provided in the water-containing biomass supercritical water gasifier flows in from the through hole 4a of the end part closing member 4 which is to an opposite side to the communicating tube 6 in which the raw material to be gasified flows in, and the treatment water flows through the helical flow passage in the inner tube 2 so as to flow out from the through hole 4a of the end part closing member 4 to the side of the communicating tube 6 in which the raw material to be gasified flows in. In other words, inside the double tube 1, the raw material to be gasified and the treatment water flow through the inner tube 2 and the outer tube 3 in opposite directions to each other. In this way, by making the raw material to be gasified and the treatment water flow through, heat exchange is performed inside the double tube 1. In other words, the double tube 1 is to be used as a heat exchanger 7.

With a method to manufacture the double tube 1 in this embodiment, first, helical protrusions 2a are formed to an outer circumference of a tube material forming the inner tube 2. The communicating tube 6 is provided at each end part of the outer tube 3, and communicates with the inside and outside of the outer tube 3, and the outer tube 3 is formed with communicating holes 3d each substantially the same size as the outer diameter of the communicating tube 6. Then, each of the two communicating holes 3d formed in the outer tube 3 is formed in a position opposing a valley part between the adjacent helical protrusions 2a provided in the inner tube 2, when the inner tube 2 is arranged inside.

The helical flow passage forming member 5 is inserted and arranged in the inner tube 2 formed with helical protrusions 2a on the outer circumference, such that the outer circumferential edge 5a of the helical flow passage forming member 5 contacts or is made to come close to the inner circumferential surface of the inner tube 2 with a small gap between the outer circumferential edge 5a and the inner circumferential surface of the inner tube 2. The both end parts of the helical flow passage forming member 5 are welded to the inner circumferential edge parts 2b of the inner tube 2.

The inner tube 2, provided inside with the helical flow passage forming member 5, is inserted in the outer tube 3 such that the tip parts of the helical protrusions 2a contact or are made to come close to with a small gap with the inner circumferential surface 3b of the outer tube 3, and the inner tube 2 is arranged inside the outer tube 3. Then, the inner tube 2 is arranged inside the outer tube 3 such that the opening parts of the communicating tubes 6 provided in the outer tube 3 are opposed to the valley part between adjacent helical protrusions 2a provided in the outer circumference of the inner tube 2.

With the inner tube 2 contained inside the outer tube 3, the end part closing members 4 are made to contact both end parts of the inner tube 2 and the outer tube 3, and the outer circumferential edge part 4b of the end part closing members 4 and outer circumferential edge parts 3a of the outer tube 3 are welded over the entire circumference, and the inner circumferential edge parts 4c of the end part closing members 4 and the inner circumferential edge parts 2b of the inner tube 2 are welded over an entire circumference. Finally, the end parts of the communicating tubes 6 are inserted in the communicating holes 3d of the outer tube 3, and the edge of the communicating holes 3d and the end part closing members 4 are welded to the outer circumferential surface of the communicating tube 6 in the outer circumferential surface side of the outer tube 3, to attach the communicating tube 6.

In this embodiment, a method of inserting the helical flow passage forming member 5 in the inner tube 2 and further inserting the inner tube 2 in the outer tube 3 is described. The inner tube 2 and the outer tube 3 may be divided into multiple parts along the longitudinal direction, and after the helical flow passage forming member 5 is arranged inside the divided inner tube 2 and the outer tube 3 and the inner tube 2 is arranged, the divided inner tube 2 and the outer tube 3 may be welded and formed.

According to the double tube 1 of this embodiment, the inner tube 2 and the outer tube 3 are helically divided with helical protrusions 2a provided in the outer circumference of the inner tube 2, and accordingly an outer helical flow passage 3c having a small cross-section is formed between the helical protrusions 2a, provided in the outer circumference of the inner tube 2, and the inner circumferential surface 3b of the outer tube 3b. Then, the helical protrusions 2a formed in the outer circumferential part of the inner tube 2 helically divide the space between the inner tube 2 and the outer tube 3, thus by merely forming a thread, for example, as the helical protrusions 2a in the outer circumferential surface of the inner tube 2 using such as a general-purpose lathe, the outer helical flow passage 3c can be easily formed between the inner tube 2 and the outer tube 3.

The inside of the inner tube 2 is helically divided with the helical flow passage forming member 5 provided in the inner tube 2, and the inner helical flow passage 2d with a smaller cross section than the cross section of the inner tube 2 is formed. Thus, the flow passage between the inner tube 2 and the outer tube 3 and the flow passage formed inside the inner tube 2 are both formed with a smaller cross section than the cross section of the cylindrical inner tube and the outer tube. Thus, the flow velocity in the inner helical flow passage 2d and the outer helical flow passage 3c can be maintained as a turbulent flow region that can flow while sucking in such as lumps of inorganic material.

Further, the inner helical flow passage 2d formed in the inner tube 2 and in the outer helical flow passage 3c formed between the inner tube 2 and the outer tube 3 are both helical. Thus, the flow passage cross section is smaller than the cross section between the inner tube and the outer tube of the double tube formed by containing concentrically the cylindrical inner tube in the cylindrical outer tube, and a double tube 1 with a longer flow passage length than the length of the outer tube 3 can be formed. Accordingly, by using the double tube 1 in this embodiment, the length of the outer tube 3 to be approximately the outer dimension can be kept short while keeping the flow passage length long, and further the cost can be suppressed, and the heat exchanger 7 that can more efficiently exchange heat can be provided at a lower cost.

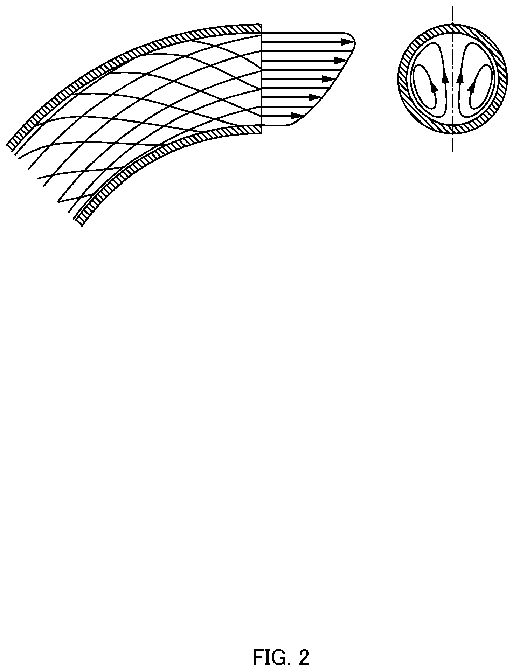

In this embodiment, with the heat exchanger 7 using the double tube 1, a low temperature raw material to be gasified is made to flow through the outer helical flow passage 3c, and high temperature treatment water is made to flow through the inner helical flow passage 2d, thus while the raw material to be gasified is rising in temperature, the raw material to be gasified is mixed with a secondary flow between the inner tube 2 and the outer tube 3, and activated carbon, which is a gasification catalyst that is suspended in the raw material to be gasified, and biomass are mixed and homogenized. Further, when the activated carbon and the biomass are mixed, the contacting rate of the catalyst and biomass improves, to increase the catalyst effect. It should be noted that the secondary flow is a flow that occurs in the helical tube, as shown in Fig. 2.

Further, with the outer helical flow passage 3c, a heat-transfer surface during heat exchange is the outer circumferential surface of the inner tube 2, namely the surface of the helical protrusions 2a, and a heat-transfer area can be more widely ensured than in the case of a cylindrical outer circumferential surface. Further, due to the secondary flow, the raw material to be gasified that flows in this outer helical flow passage 3c flows while the heat-transfer surface side and the central side and the outer circumference side of the outer helical flow path 3c are more frequently switched. Thus, the rate of temperature rise of the raw material to be gasified is increased and generation of tar is suppressed. Further, the heat-transfer coefficient of the treatment water side improves, and thus an exchange quantity of heat per unit length of the heat exchanger 7 using the double tube 1 can be improved.

In the case of using the double tube 1 as above, with a normal thin piping there will be concern of being crushed, and the inside of the inner helical flow passage 2d will always be at a higher pressure than the outer helical flow passage 3c. The double tube 1 of this embodiment, however, is provided with helical protrusions 2a in the outer circumference of the inner tube 2 that forms a boundary between the inner tube 2 and the outer tube 3, thus the helical protrusions 2a become the framework structure, and even when the outer helical flow passage 3c is always at a higher pressure than inside the inner helical flow passage 2d, crushing can be prevented.

The above embodiment describes an example of providing the helical protrusions to be provided to the outer circumference of the inner tube 2 by providing the helical protrusions 2a to the outer circumference of the inner tube 2. It is not limited to the above, however, and for example, the inner tube may be configured from a cylindrical tube material and a fin having a helical curved surface, and the helical fin may be welded to the outer circumferential surface of the tube material configuring the inner tube. In this case, the outer helical flow passage can be formed with the fin that matches the outer diameter of the inner tube and the inner diameter of the outer tube, and accordingly the cross section of the outer helical flow passage can be arbitrarily set.

In the above embodiment, the heat exchanger 7 using the double tube 1 is a heat exchanger of a fluid at high temperature and high pressure used in a water-containing biomass supercritical water gasifier, but it is not limited to such.

The above embodiment is to facilitate understanding of this invention, and should not be used to limit interpretation of this invention. The invention may be changed and/or modified, without departing from the gist thereof, and it is needless to say that this invention includes its equivalents.

### Reference Signs List

- 1: double tube,
- 2: inner tube,
- 2a: helical protrusion,
- 2b: inner circumferential edge part,
- 2c: inner circumferential surface,
- 2d: inner helical flow passage,
- 3: outer tube,
- 3a: outer circumferential edge part,
- 3b: inner circumferential surface,
- 3c: outer helical flow passage,
- 3d: communicating hole,
- 4: end part closing member,
- 4a: through hole,
- 4b: outer circumferential edge part,
- 4c: inner circumferential edge part,
- 5: helical flow passage forming member,
- 5a: outer circumferential edge,
- 6: communicating tube,
- 7: heat exchanger

## Claims

1. A double tube comprising:
a cylindrical outer tube;
an inner tube including a helical protrusion in an outer circumference, the inner tube forming a helical flow passage with the outer tube, the inner tube being provided inside the outer tube; and
a helical flow passage forming member that forms a helical flow passage inside the inner tube, the helical flow passage forming member being provided inside the inner tube.

2. The double tube according to claim 1, wherein
the helical protrusion is a thread that is formed in an outer circumference of a cylindrical tube material forming the inner tube.

3. The double tube according to claim 1, wherein
the helical protrusion is a fin provided helically in an outer circumference of a cylindrical tube material configuring the inner tube.

4. The double tube according to any one of claims 1 to 3, wherein
the helical flow passage forming member is a helical plate having a curved surface formed helically.

5. A heat exchanger comprising:
an inner tube of a double tube according to any one of claims 1 to 4, the inner tube being formed of a metal that is heat-conductive and is heat-resistant,
the heat exchanger conducting heat exchange between a fluid that flows through a helical flow passage in an outer side of the inner tube of the double tube and a fluid that flows through a helical flow passage in an inner side of the inner tube.

6. A method to manufacture a double tube including an inner tube and an outer tube, comprising:
forming the inner tube provided with a helical protrusion in an outer circumference;
forming a helical flow passage forming member that forms a helical flow passage inside the inner tube; and
fixing in an integral manner
the protrusion to an inner circumferential surface of the outer tube by arranging the protrusion to contact or be near to the inner circumferential surface of the outer tube, and
the helical flow passage forming member to an inner circumferential surface of the inner tube by arranging the helical flow passage forming member to contact or be near to the inner circumferential surface of the inner tube.

7. The method to manufacture a double tube according to claim 6, wherein
a thread, as the helical protrusion, is formed in an outer circumference of a tube material that forms the inner tube.

8. The method to manufacture a double tube according to claim 6, wherein
a helical fin, as the helical protrusion, is welded to an outer circumferential surface of a tube material that configures the inner tube.
